# EUROPÄISCHE PATENTSCHRIFT

(11) **EP 1 473 816 B1**
(45) Veröffentlichungstag und Bekanntmachung des Hinweises auf die Patenterteilung: **08.10.2008**
(21) Anmeldenummer: 04004316.8
(22) Anmeldetag: 26.02.2004
(51) Int. Cl.: H02K 11/04, H02K 15/03, H02K 1/28

(54) **Permanentmagnet und dessen Befestigung in einer elektrischen Maschine**
Permanent magnet and its fixation in an electric machine
Aimant permanent et sa fixation dans une machine électrique

(30) Priorität: 29.04.2003 DE 10319188
(43) Veröffentlichungstag der Anmeldung: 03.11.2004
(73) Patentinhaber: ROBERT BOSCH GMBH, 70442 Stuttgart (DE)
(72) Erfinder: Wehrle, Andreas, 77652 Offenburg (DE)

(56) Entgegenhaltungen:
- EP-A- 0 549 430
- FR-A- 2 221 842
- GB-A- 2 007 146
- US-A- 4 529 900
- PATENT ABSTRACTS OF JAPAN Bd. 0103, Nr. 56 (E-459), 29. November 1986 (1986-11-29) & JP 61 154437 A (MATSUSHITA ELECTRIC IND CO LTD), 14. Juli 1986 (1986-07-14)
- PATENT ABSTRACTS OF JAPAN Bd. 0153, Nr. 79 (E-1115), 25. September 1991 (1991-09-25) & JP 3 150030 A (SHIBAURA ENG WORKS CO LTD), 26. Juni 1991 (1991-06-26)

## Beschreibung

### Stand der Technik

Die vorliegende Erfindung betrifft eine elektrische Maschine, wie beispielsweise ein Elektromotor oder ein Generator, mit einem Rotor, einen Stator und einem Permanentmagneten.

Derartige elektrische Maschinen sind aus dem Stand der Technik wohl bekannt. Es sind beispielsweise permanentmagnetisch erregte Gleichstrommotoren bekannt, welche elektronisch oder mechanisch kommutiert werden. Die Magnete an den elektronisch kommutierten Motoren sind vorzugsweise am Rotor angebracht und bei den mechanisch kommutierten Motoren am Stator. Üblicherweise werden die Permanentmagnete dabei mittels Kleben mit dem Rotor bzw. dem Stator verbunden. Weiterhin ist bei radialer Magnetisierung des Magneten ein Eisenmantel (bei Befestigung des Magneten am Stator) bzw. ein Eisenkern (bei Befestigung des Magneten am Rotor) vorgesehen, um den Rückschluss zu den Polen des Magneten herzustellen. Bei den bekannten elektrischen Maschinen ergibt sich jedoch aufgrund von Fertigungstoleranzen immer ein Luftspalt zwischen dem Eisenmantel bzw. dem Eisenkern und dem Permanentmagneten.

Dadurch entsteht ein magnetischer Spannungsabfall, welcher die abgegebene Motorleistung verringert und den Motor entsprechend bei gleicher abzugebender Leistung stärker erwärmt. Je größer jedoch der Temperaturbetriebszustand einer elektrischen Maschine ist, desto geringer ist die zu erwartende Lebensdauer. Weiterhin treten auch im Betrieb aufgrund der am Rotor bzw. Stator vorhandenen unterschiedlichen Materialien in Folge der Erwärmung der Einzelkomponenten unterschiedliche Temperaturausdehnungen der Einzelkomponenten auf, so dass der Spalt zwischen dem Eisenbauteil und dem Permanentmagneten sich weiter vergrößern kann.

Dokument D1 offenbart einen Rotorgemäß Oberbegriff des Anspruchs 1.

### Vorteile der Erfindung

Eine elektrische Maschine mit den Merkmalen des Patentanspruchs 1 weist demgegenüber als ferritisches Element ein Federelement auf. Durch die Federkraft des Federelements wird sichergestellt, dass sich das ferritische Federelement in jeder Betriebssituation der elektrischen Maschine unmittelbar an die vom Luftspalt zwischen Rotor und Stator abgewandte Seite des permanentmagnetischen Elements anlegt. Dadurch wird verhindert, dass zwischen dem permanentmagnetischen Element und dem ferritischen Element (Federelement) ein Spalt entsteht, welcher im Stand der Technik einen magnetischen Spannungsabfall bewirkt und somit die abgegebene Motorleistung verringert. Weiterhin wird durch das erfindungsgemäß enge Anliegen des ferritischen Elements am permanentmagnetischen Element die sonst durch den im Stand der Technik vorhandenen Spalt auftretende Wärmeentwicklung verringert, so dass die elektrische Maschine eine längere Lebensdauer aufweist. Das permanentmagnetische Element kann dabei entweder am Rotor oder am Stator angeordnet sein und das ferritische Element ist dann jeweils an der vom Luftspalt zwischen Rotor und Stator abgewandten Seite des permanentmagnetischen Elements angeordnet. D.h., bei Anordnung des permanentmagnetischen Elements am Rotor ist das ferritische Element an der Innenseite des permanentmagnetischen Elements angeordnet und bei Anordnung des permanentmagnetischen Elements am Stator ist das ferritische Element an der Außenseite des permanentmagnetischen Elements angeordnet.

Die Unteransprüche zeigen bevorzugte Weiterbildungen der Erfindung.

Besonders bevorzugt ist das Federelement als Flachspiralfeder ausgebildet. Dadurch kann es sehr kostengünstig bereitgestellt werden und ist weiterhin auch auf einfache Weise montierbar. Vorzugsweise weist das Federelement eine besonders weiche Biegekennlinie auf und ist aus einem Weicheisenmaterial hergestellt.

Mittels der Flachspiralfeder kann besonders vorteilhaft über den ganzen Temperaturbereich während des Betriebes eine gleichbleibende Federrate erhalten werden, mit welcher das Federelement gegen das permanentmagnetische Element drückt. Somit können auch temperaturbedingte Änderungen der Abmessungen des permanentmagnetischen Elements und/oder anderer Bauteile der elektrischen Maschine durch die Flachspiralfeder ausgeglichen werden, so dass das Federelement immer unmittelbar an dem permanentmagnetischen Element anliegt.

Eine besonders einfache und schnelle Montage des Federelements wird dadurch möglich, dass sich das Federelement im endmontierten Zustand zwischen zwei muffenartigen Bauteilen abstützt. Dadurch kann auf eine aufwändige Befestigung des Federelements verzichtet werden.

Weiterhin bevorzugt ist das permanentmagnetische Element ebenfalls zwischen zwei muffenartigen Bauteilen angeordnet. Um die Teileanzahl dabei möglichst gering zu halten, übernehmen die muffenartigen Bauteile sowohl die Abstützung des Federelements als auch des permanentmagnetischen Elements.

Um eine ausreichende Befestigung des permanentmagnetischen Elements sicher zu stellen, ist vorzugsweise eine axiale Druckfeder vorgesehen, welche zwischen wenigstens einem muffenartigen Bauteil und dem permanentmagnetischen Element angeordnet ist, um das permanentmagnetische Element zwischen den muffenartigen Bauteilen einzuspannen. Dadurch kann weiterhin erreicht werden, dass im Wesentlichen nur Druckspannungen auf das permanentmagnetische Element wirken. Eine andere Möglichkeit der Befestigung des permanentmagnetischen Elements an den muffenartigen Bauteilen ist eine Befestigung mittels eines Klebstoffs.

Die muffenartigen Bauteile sind vorzugsweise an der Rotorwelle bzw. am Stator mittels einer festen Verbindung, z.B. einer Schweißverbindung, Preßverbindung oder einer Klebeverbindung, befestigt. Eine alternative Befestigungsmöglichkeit ist, dass jedes muffenartige Bauteil mittels eines Sicherungsrings oder eines Sprengrings befestigbar ist.

Weiter bevorzugt ist zwischen dem permanentmagnetischen Element und jedem muffenartigen Bauteil ein druckelastischer Ring angeordnet. Dadurch können radiale Spannungen, welche auf das permanentmagnetische Element wirken, minimiert werden. Besonders bevorzugt sind die druckelastischen Ringe dabei jeweils in einer in dem muffenartigen Bauteil gebildeten Aussparung angeordnet.

Die elektrische Maschine ist vorzugsweise als Elektromotor ausgebildet und wird besonders bevorzugt in Kraftfahrzeugen als Antrieb für elektrisch betriebene Einrichtungen wie z.B. Scheibenwischer, Fensterheber, Sitzverstelleinrichtungen usw. verwendet.

### Zeichnungen

Nachfolgend werden Ausführungsbeispiele der Erfindung unter Bezugnahme auf die Zeichnung beschrieben. Dabei zeigt:
- Figur 1: eine schematische Schnittansicht einer elektrischen Maschine gemäß einem ersten Ausführungsbeispiel der vorliegenden Erfindung, und
- Figur 2: eine schematische Schnittansicht einer elektrischen Maschine gemäß einem zweiten Ausführungsbeispiel der vorliegenden Erfindung.

### Beschreibung der Ausführungsbeispiele

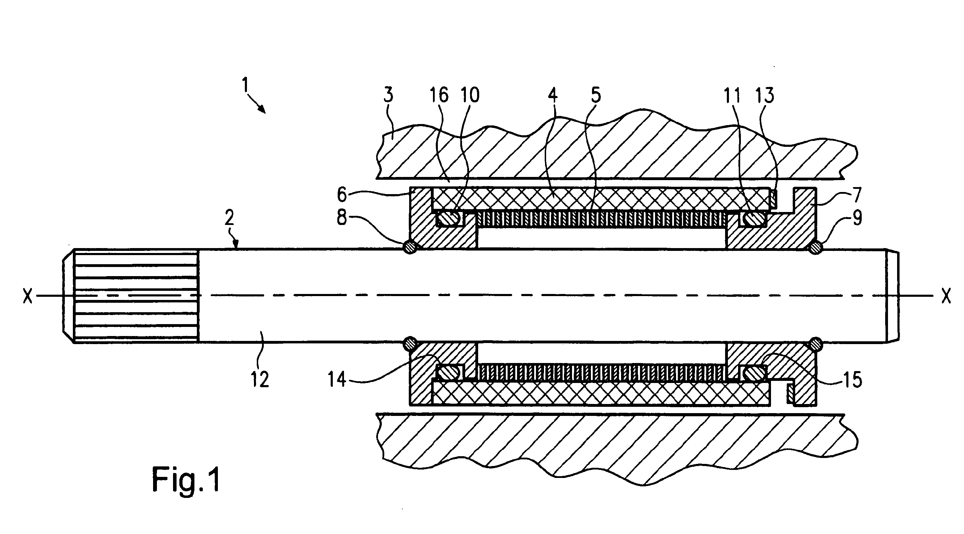

Figur 1 zeigt eine elektrische Maschine 1 gemäß einem Ausführungsbeispiel der vorliegenden Erfindung. Die elektrische Maschine 1 ist als elektrischer Motor ausgebildet und umfasst in bekannter Weise einen Rotor 2 und einen Stator 3. Der Rotor 2 umfasst eine Rotorwelle 12, an welcher ein permanentmagnetisches Element 4 angeordnet ist. Das permanentmagnetische Element 4 weist die Form eines Hohlzylinders auf und ist zwischen einer ersten Muffe 6 und einer zweiten Muffe 7 eingespannt. Das permanentmagnetische Element 4 weist dabei eine hohlzylindrische Gestalt in Richtung der Längsachse X-X des Rotors 2 auf. Dieses Einspannen zwischen die beiden Muffen 6, 7 erfolgt mittels einer axialen Druckfeder 13, welche sich an der Muffe 7 sowie einem in Axialrichtung X-X liegenden Ende des permanentmagnetischen Elements 4 abstützt. Das permanentmagnetische Element 4 kann auch durch zwei sich gegenüber liegende Druckfedern 13 geklemmt werden, wobei sich jeweils eine Druckfeder an einer Muffe abstützt.

Ein ferritisches Element, welches als Federelement 5 ausgebildet ist, ist an der Innenseite, d. h. der von einem Luftspalt 16 zwischen dem Rotor 2 und dem Stator 3 abgewandten Seite des permanentmagnetischen Elements 4 angeordnet. Das Federelement 5 ist als Flachspiralfeder ausgebildet und weist eine Vielzahl von Windungen auf.

Wie aus Figur 1 ersichtlich ist, ist das Federelement 5 zwischen den beiden Muffen 6, 7 eingespannt, so dass es mit einer leichten, radial nach außen gerichteten Kraft eng an der Innenseite des permanentmagnetischen Elements 4 anliegt. Somit wird verhindert, dass sich ein Spalt zwischen dem permanentmagnetischen Element 4 und dem Federelement 5 bildet.

Die beiden Muffen 6, 7 sind jeweils mittels eines Sicherungsrings 8, 9 an der Rotorwelle 12 gesichert. Weiterhin weist die Muffe 6 eine ringförmige Aussparung 14 auf und die Muffe 7 weist eine ringförmige Aussparung 15 auf. Die beiden Aussparungen 14, 15 der Muffen dienen zur Aufnahme jeweils eines druckelastischen Rings 10 bzw. 11. Die druckelastischen Ringe 10, 11 verhindern, dass über die Muffen 6, 7 radial nach außen gerichtete Kräfte auf das permanentmagnetische Element 4 wirken.

Das als Flachspiralfeder ausgebildete Federelement 5 ist aus einem biegeweichen und elektrisch leitendem Weicheisen hergestellt. Dabei weist die Flachspiralfeder über ihre Länge eine gleichbleibende Federrate mit flacher Kennlinie der Biegeelastizität auf. Somit wird sichergestellt, dass in jedem Betriebszustand der elektrischen Maschine über die unterschiedlichen Temperaturbereiche das Federelement 5 unmittelbar am permanentmagnetischen Element 4 anliegt, so dass kein Spalt zwischen dem ferritischen Element und dem permanentmagnetischen Element 4 vorhanden ist. Somit wird erfindungsgemäß verhindert, dass ein magnetischer Spannungsabfall zwischen dem permanentmagnetischen Element 4 und dem ferritischen Federelement 5 die abgegebene Motorleistung verringert bzw. den Motor bei gleich abzugebender Leistung mehr erwärmt.

Im beschriebenen ersten Ausführungsbeispiel sind die Muffen 6, 7 mittels Sicherungsringen 8, 9 an der Ankerwelle 12 befestigt. Es ist jedoch auch möglich, dass die Muffen 6, 7 beispielsweise mittels Schweißen oder Kleben oder Verstemmen fest auf der Ankerwelle 12 befestigt werden oder dass eine Presspassung zwischen den Muffen 6, 7 und der Ankerwelle 12 ausgebildet ist.

Für die Montage des als Flachspiralfeder ausgebildeten Federelements 5 wird die Flachspiralfeder zusammengedreht, sodass ihr Durchmesser kleiner als der Innendurchmesser des hohlzylindrischen permanentmagnetischen Elements 4 ist und in das permanentmagnetische Element geschoben werden kann. Nach dem Einführen der Flachspiralfeder werden die beiden Enden freigegeben, so dass sich die Feder entspannt und sich eng an die Innenseite des permanentmagnetischen Elements 4 anlegt. Weiterhin ermöglicht die axiale Druckkraft des Federelements 5 eine axiale Spielfreiheit und die Reibung an der Innenfläche des permanentmagnetischen Elements 4 verhindert darüber hinaus axiale Schwingungen des Federelements 5 während des Betriebes.

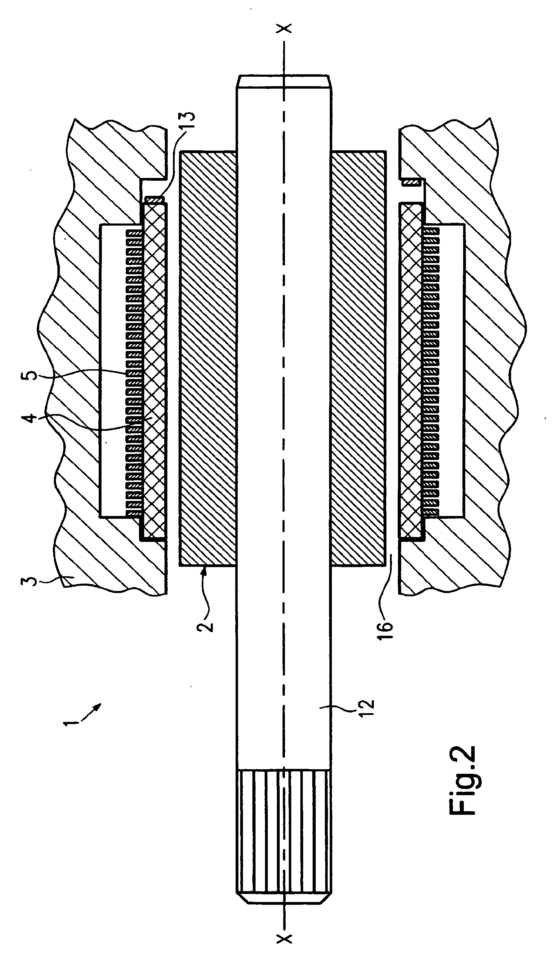

Nachfolgend wird unter Bezugnahme auf Figur 2 eine elektrische Maschine gemäß einem zweiten Ausführungsbeispiel der vorliegenden Erfindung beschrieben, wobei funktional gleiche Teile mit den gleichen Bezugszeichen wie im ersten Ausführungsbeispiel bezeichnet sind.

Wie aus der schematischen Ansicht von Figur 2 ersichtlich ist, ist beim zweiten Ausführungsbeispiel im Unterschied zum ersten Ausführungsbeispiel das permanentmagnetische Element 4 am Stator 3 angeordnet. Das permanentmagnetische Element 4 weist wiederum die Form eines Hohlzylinders auf und wird mittels einer axialen Druckfeder 13 am Stator 3 gehalten. Wie aus Figur 2 ersichtlich ist, ist an der von einem Luftspalt 16 zwischen dem Stator 3 und dem Rotor 2 abgewandten Seite des permanentmagnetischen Elements 4 das ferritische Federelement 5 angeordnet. Das Federelement 5 ist als Flachspiralfeder ausgebildet und liegt eng am äußeren Mantel des permanentmagnetischen Elements 4 an. Die Federkraft des ferritischen Federelements 5 stellt dabei sicher, dass kein Spalt zwischen dem Federelement 5 und dem permanentmagnetischen Element 4 vorhanden ist.

Zur Montage des Federelements 5 wird dieses entgegen seiner Federkraft aufgedreht, sodass es einen größeren Durchmesser als der Außendurchmesser des permanentmagnetischen Elements 4 aufweist. Anschließend wird es über das permanentmagnetische Element 4 gezogen und die beiden Enden des Federelements 5 freigegeben, sodass sich die Feder eng an die äußere Mantelfläche des permanentmagnetischen Elements 4 anlegt. Somit stellt das Federelement 5 des zweiten Ausführungsbeispiels nach innen gerichtete Federkräfte bereit, sodass das ferritische Federelement unmittelbar am permanentmagnetischen Element 4 anliegt.

## Patentansprüche

1. Elektrische Maschine, umfassend einen Rotor (2), einen Stator (3) und ein am Rotor oder am Stator angeordnetes permanentmagnetisches Element (4), welches eine hohlzylindrische Gestalt aufweist, wobei zwischen dem Rotor (2) und dem Stator (3) ein Luftspalt (16) ausgebildet ist und das permanentmagnetische Element (4) eine Seite des Luftspalts (16) begrenzt, wobei an dem permanentmagnetischen Element (4) an einer vom Luftspalt (16) abgewandten Seite des permanentmagnetischen Elements (4) ein Federelement (5) angeordnet ist, wobei das Federelement (5) ständig und unmittelbar an der vom Luftspalt (16) abgewandten Seite des permanentmagnetischen Elements (4) anliegt und eine radiale Kraft auf das permanentmagnetische Element (4) ausübt, **dadurch gekennzeichnet,** und dass das Federelement (5) aus einem Weicheisenmaterial hergestellt ist.

2. Elektrische Maschine nach Anspruch 1, **dadurch gekennzeichnet, dass** das Federelement (5) als Flachspiralfeder ausgebildet ist.

3. Elektrische Maschine nach einem der vorhergehenden Ansprüche, **dadurch gekennzeichnet, dass** das Federelement (5) eine flache Kennlinie der Biegeelastizität aufweist.

4. Elektrische Maschine nach einem der vorhergehenden Ansprüche, **dadurch gekennzeichnet, dass** sich das Federelement (5) zwischen einem ersten muffenartigen Bauteil (6) und einem zweiten muffenartigen Bauteil (7) abstützt.

5. Elektrische Maschine nach einem der vorhergehenden Ansprüche, **dadurch gekennzeichnet, dass** das permanentmagnetische Element zwischen einem ersten muffenartigen Bauteil (6) und einem zweiten muffenartigen Bauteil (7) angeordnet ist.

6. Elektrische Maschine nach Anspruch 5, **gekennzeichnet durch** eine axiale Druckfeder (13), welche zwischen einem muffenartigen Bauteil (6, 7) und dem permanentmagnetischen Element (4) angeordnet ist und eine Druckkraft in Axialrichtung (X-X) des permanentmagnetischen Elements ausübt.

7. Elektrische Maschine nach einem der Ansprüche 4 bis 6, **dadurch gekennzeichnet, dass** die muffenartigen Bauteile (6, 7) an einer Rotorwelle (12) mittels einer festen Verbindung befestigt sind oder dass jedes muffenartige Bauteil (6, 7) mittels eines Sicherungsrings (8, 9) an der Rotorwelle (12) befestigt ist.

8. Elektrische Maschine nach einem der Ansprüche 4 bis 7, **dadurch gekennzeichnet, dass** zwischen dem permanentmagnetischen Element (4) und jedem muffenartigen Bauteil (6, 7) ein druckelastischer Ring (10, 11) angeordnet ist.

9. Elektrische Maschine nach Anspruch 8, **dadurch gekennzeichnet, dass** der druckelastische Ring (10, 11) in einer im muffenartigen Bauteil (6, 7) ausgebildeten Aussparung (14, 15) angeordnet ist.

10. Elektrische Maschine nach Anspruch 5, **dadurch gekennzeichnet, dass** das permanentmagnetische Element (4) an den muffenartigen Bauteilen (6, 7) mittels einer Klebeverbindung befestigt ist.

## Claims

1. Electrical machine, comprising a rotor (2), a stator (3) and a permanent-magnet element (4) which is arranged on the rotor or on the stator and has a hollow-cylindrical design, with an air gap (16) being formed between the rotor (2) and the stator (3) and the permanent-magnet element (4) bounding one side of the air gap (16), with a spring element (5) being arranged on the permanent-magnet element (4) on a side of the permanent-magnet element (4) which is averted from the air gap (16), and with the spring element (5) resting constantly and directly on that side of the permanent-magnet element (4) which is averted from the air gap (16) and exerting a radial force on the permanent-magnet element (4), **characterized in that** the spring element (5) is produced from a soft iron material.

2. Electrical machine according to Claim 1, **characterized in that** the spring element (5) is in the form of a flat helical spring.

3. Electrical machine according to either of the preceding claims, **characterized in that** the spring element (5) has a flat characteristic curve of flexural elasticity.

4. Electrical machine according to one of the preceding claims, **characterized in that** the spring element (5) is supported between a first socket-like component (6) and a second socket-like component (7).

5. Electrical machine according to one of the preceding claims, **characterized in that** the permanent-magnet element is arranged between a first socket-like component (6) and a second socket-like component (7).

6. Electrical machine according to Claim 5, **characterized by** an axial compression spring (13) which is arranged between a socket-like component (6, 7) and the permanent-magnet element (4) and exerts a pressure force in the axial direction (X-X) of the permanent-magnet element.

7. Electrical machine according to one of Claims 4 to 6, **characterized in that** the socket-like components (6, 7) are fixed to a rotor shaft (12) by means of a fixed connection, or **in that** each socket-like component (6, 7) is fixed to the rotor shaft (12) by means of a securing ring (8, 9).

8. Electrical machine according to one of Claims 4 to 7, **characterized in that** a compressively elastic ring (10, 11) is arranged between the permanent-magnet element (4) and each socket-like component (6, 7).

9. Electrical machine according to Claim 8, **characterized in that** the compressively elastic ring (10, 11) is arranged in a cutout (14, 15) which is formed in the socket-like component (6, 7).

10. Electrical machine according to Claim 5, **characterized in that** the permanent-magnet element (4) is fixed to the socket-like components (6, 7) by means of an adhesive connection.

## Revendications

1. Machine électrique comportant un rotor (2), un stator (3) et un élément à aimantation permanente (4), prévu sur le rotor ou le stator, cet élément ayant une forme cylindrique creuse et entre le rotor (2) et le stator (3), il y a un entrefer (16) et l'élément à aimantation permanente (4) délimite un côté de l'entrefer (16),
un élément de ressort (5) étant prévu sur l'élément à aimantation permanente (4), sur le côté de cet élément à aimantation permanente (4) non tourné vers l'entrefer (16), et
l'élément à ressort (5) est appliqué en permanence et directement contre le côté de l'élément à aimantation permanente (4) non tourné vers l'entrefer (16) en exerçant une force radiale sur l'élément à aimantation permanente (4),
**caractérisée en ce que**
l'élément de ressort (5) est fabriqué en un fer doux.

2. Machine électrique selon la revendication 1,
**caractérisée en ce que**
l'élément de ressort (5) est un ressort spiral plat.

3. Machine électrique selon l'une des revendications précédentes,
**caractérisée en ce que**
l'élément de ressort (5) a une caractéristique d'élasticité de flexion plate.

4. Machine électrique selon l'une des revendications précédentes,
**caractérisée en ce que**
l'élément de ressort (5) s'appuie entre un premier composant en forme de manchon (6) et un second composant en forme de manchon (7).

5. Machine électrique selon l'une des revendications précédentes,
**caractérisée en ce que**
l'élément à aimant permanent est installé entre un premier composant en forme de manchon (6) et un second composant en forme de manchon (7).

6. Machine électrique selon la revendication 5,
**caractérisée par**
un ressort de compression axial (13) installé entre un composant en forme de manchon (6, 7) et l'élément à aimantation permanente (4) et ce ressort exerce une poussée dans la direction axiale (x-x) de l'élément à aimantation permanente.

7. Machine électrique selon l'une des revendications 4 à 6,
**caractérisée en ce que**
les composants en forme de manchon (6, 7) sont fixés sur un arbre de rotor (12) à l'aide d'une liaison solidaire ou **en ce que** chaque composant en forme de manchon (6, 7) est fixé à l'arbre de rotor (12) à l'aide d'une bague de fixation (8, 9).

8. Machine électrique selon l'une des revendications 4 à 7,
**caractérisée par**
une bague élastique en pression (10, 11) entre l'élément à aimantation permanente (4) et chaque composant en forme de manchon (6, 7).

9. Machine électrique selon la revendication 8,
**caractérisée en ce que**
la bague élastique en pression (10, 11) est installée dans une cavité (44, 15) réalisée dans le composant en forme de manchon (6, 7).

10. Machine électrique selon la revendication 5,
**caractérisée en ce que**
l'élément à aimantation permanente (4) est fixé sur les pièces en forme de manchon (6, 7) par l'intermédiaire d'une liaison collée.
